(19) Europäisches Patentamt / European Patent Office / Office européen des brevets

(11) **EP 2 837 539 B1**

(12) **FASCICULE DE BREVET EUROPEEN**

(45) Date de publication et mention
de la délivrance du brevet:
**16.05.2018 Bulletin 2018/20**

(51) Int Cl.:
***B60W 40/10*** *(2012.01)* *B60W 50/00* *(2006.01)*

(21) Numéro de dépôt: **14306000.2**

(22) Date de dépôt: **25.06.2014**

(54) **Procédé de détermination de l'autonomie d'un véhicule, et système correspondant**

Verfahren zur Bestimmung der Reichweite eines Fahrzeugs, und entsprechendes System

Method for determining the range of a vehicle, and corresponding system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**18.02.2015 Bulletin 2015/08**

(73) Titulaire: **Renault s.a.s.
92100 Boulogne-Billancourt (FR)**

(72) Inventeur: **Ben Aicha, Fehd
78280 Guyancourt (FR)**

(56) Documents cités:
**DE-A1-102009 052 853     DE-A1-102011 055 669
DE-A1-102011 107 818     US-A- 5 487 002**

**Description**

L'invention concerne la détermination de l'autonomie d'un véhicule muni d'un groupe motopropulseur électrique, notamment l'autonomie des véhicules à traction électrique ou des véhicules hybrides.

L'autonomie des véhicules à traction électrique ou hybride doit en général être communiquée à un conducteur pour l'informer de la distance que son véhicule peut réellement parcourir. La limitation de cette autonomie est essentiellement due à la batterie de traction qui stocke de l'énergie, de la même manière que le carburant correspond à l'énergie stockée au sein des véhicules thermiques.

Il est particulièrement difficile d'estimer précisément l'autonomie d'un véhicule muni d'un groupe motopropulseur électrique, en particulier à cause des contraintes de précision qui ne sont pas présentes au sein des véhicules thermiques. L'autonomie d'un tel véhicule est liée à un certain nombre de facteurs. Elle dépend notamment de la capacité de la batterie du véhicule, qui dépend elle-même de plusieurs autres facteurs comme la température, le vieillissement, ou encore la précision des capteurs.

Cette autonomie dépend également d'autres éléments du véhicule, notamment les éléments du groupe motopropulseur électrique et leur température, de la précision des capteurs utilisés et du type de roulage. Aussi, l'autonomie d'un tel véhicule dépend de l'utilisation d'appareils électriques embarqués tels que le chauffage ou le refroidissement de l'habitacle du véhicule.

On pourra se référer au document DE 10302504 qui décrit un procédé de détermination de l'autonomie d'un véhicule électrique prenant en considération les conditions de roulage de l'utilisateur. Cette solution n'est pas assez précise.

Le document DE102011055669 décrit une détermination de l'autonomie sur la base de l'état de charge d'une batterie et de l'énergie cinétique et potentielle du véhicule, en considérant différents facteurs de dissipation d'énergie.

En général, l'autonomie des véhicules électriques est calculée en calculant le rapport entre l'énergie disponible dans la batterie et la consommation. Cette consommation est déterminée par une acquisition de données pendant une durée déterminée préalablement. Néanmoins, un tel calcul fournit une autonomie calculée qui peut différer de l'autonomie réelle du véhicule de 50 kilomètres. Cet écart est dû aux dispersions dans la détermination de la consommation du véhicule ainsi que dans la détermination de l'énergie disponible dans la batterie, cette dernière pouvant varier avec la température.

Le but de l'invention est donc d'obtenir une estimation plus précise de l'autonomie d'un véhicule.

Selon un aspect, il est proposé un procédé de détermination de l'autonomie d'un véhicule muni d'un groupe motopropulseur électrique permettant la récupération d'énergie.

Selon, une caractéristique générale, le procédé comprend :

- une détermination de l'énergie disponible dans une batterie,
- une détermination du rendement du groupe motopropulseur électrique,
- une détermination de la consommation d'au moins un élément du groupe motopropulseur électrique,
- une détermination d'un paramètre d'utilisation du groupe motopropulseur électrique en mode moteur par rapport à un mode de récupération d'énergie,
- une détermination de l'autonomie du véhicule en fonction de l'énergie disponible dans la batterie, du rendement du groupe motopropulseur électrique, de la consommation du groupe motopropulseur électrique et dudit paramètre.

Alors que dans l'art antérieur on ne prend pas en considération le rendement du groupe motopropulseur électrique on prend ici en considération ce rendement pour obtenir une détermination plus précise de l'autonomie du véhicule.

La détermination du rendement du groupe motopropulseur électrique peut comprendre une acquisition de données pendant une première période.

On pourra par exemple mettre en oeuvre une acquisition pendant une durée de l'ordre d'une semaine pour déterminer de manière précise ce rendement ainsi que l'usage classique de l'utilisateur du véhicule.

La détermination du rendement du groupe motopropulseur et la détermination de la consommation du groupe motopropulseur électrique comprennent des déterminations des énergies nécessaires au fonctionnement des éléments du groupe motopropulseur, et de la consommation desdits éléments.

Ce sont ces énergies qui seront déterminées par une acquisition pendant une durée longue, par exemple une semaine. On obtient ainsi une valeur précise de rendement du groupe motopropulseur électrique.

Le procédé peut comprendre en outre une détermination des énergies nécessaires au fonctionnement d'appareils électriques disposés dans le véhicule en dehors du groupe motopropulseur pour déterminer ledit rendement du groupe motopropulseur électrique et une détermination des consommations desdits appareils électriques disposés dans le véhicule en dehors du groupe motopropulseur pour déterminer ladite autonomie.

Le véhicule électrique comprend un certain nombre d'appareils électriques, par exemple des appareils de chauffage ou de refroidissement du véhicule, et en déterminant les énergies nécessaires à leur fonctionnement et leur consommation, on obtient une détermination encore plus précise de l'autonomie du véhicule.

La détermination des énergies et des consommations desdits appareils électriques disposés dans le véhicule en dehors du groupe motopropulseur peut comprendre une acquisition de données pendant une deuxième période, la durée de la première période étant plus longue que la durée de la deuxième période.

Les énergies et les consommations de ces appareils électriques peuvent dépendre des conditions ambiantes, notamment de la météo, il est nécessaire de ne prendre en compte leur fonctionnement que sur une durée courte et voisine de la mise en oeuvre du procédé, par exemple 12 heures de roulage.

La détermination de l'autonomie du véhicule peut être mise en oeuvre par résolution d'une équation ou par lecture dans des cartographies.

Il est notamment avantageux d'utiliser des cartographies lorsque des motopropulseurs électriques complexes sont utilisés, par exemple au sein d'un véhicule à traction hybride.

On peut prendre en considération les pertes liées à la transmission mécanique du véhicule.

Les pertes liées à la transmission mécanique du véhicule sont notamment influencées par la température ambiante. À titre d'exemple on constate qu'entre une température de l'ordre de 20°C et une température de l'ordre de -20°C on peut observer une chute de l'autonomie de l'ordre de 15 km.

Cette prise en considération des pertes liées à la transmission mécanique peut être mise en oeuvre lors de la détermination des énergies nécessaires pour la traction, par exemple en mode moteur et en mode générateur (récupération d'énergie).

On adapte ainsi la valeur du rendement du groupe motopropulseur électrique, qui peut par exemple varier de quelques pour cent, par exemple 6 %.

Selon un autre aspect de l'invention, il est proposé un système de détermination de l'autonomie d'un véhicule muni d'un groupe motopropulseur électrique permettant la récupération d'énergie.

Le système comprend :

- des moyens configurés pour déterminer l'énergie disponible dans une batterie,
- des moyens configurés pour déterminer le rendement du groupe motopropulseur électrique,
- des moyens configurés pour déterminer la consommation d'au moins un élément du groupe motopropulseur électrique,
- des moyens configurés pour déterminer un paramètre d'utilisation du groupe motopropulseur électrique en mode moteur par rapport à un mode de récupération d'énergie,
- des moyens configurés pour déterminer l'autonomie du véhicule en fonction de l'énergie disponible dans la batterie, du rendement du groupe motopropulseur électrique, de la consommation du groupe motopropulseur électrique et dudit paramètre.

Les moyens configurés pour déterminer le rendement du groupe motopropulseur électrique peuvent comprendre des moyens d'acquisition de données pendant une première période.

Le système peut comprendre en outre des moyens configurés pour déterminer des énergies nécessaires au fonctionnement des éléments du groupe motopropulseur, et à la consommation desdits éléments, en communication avec les moyens configurés pour déterminer le rendement du groupe motopropulseur et les moyens configurés pour déterminer la consommation du groupe motopropulseur électrique.

Le système peut comprendre en outre des moyens configurés pour déterminer les énergies nécessaires au fonctionnement d'appareils électriques disposés dans le véhicule en dehors du groupe motopropulseur en communication avec les moyens configurés pour déterminer le rendement du groupe motopropulseur électrique, et des moyens configurés pour déterminer des consommations desdits appareils électriques disposées dans le véhicule en dehors du groupe motopropulseur.

Les moyens configurés pour déterminer les énergies et des consommations des appareils électriques disposés dans le véhicule en dehors du groupe motopropulseur peuvent comprendre des moyens d'acquisition de données pendant une deuxième période, la durée de la première période étant plus longue que la durée de la deuxième période.

Les moyens configurés pour déterminer l'autonomie du véhicule peuvent comprendre des moyens de résolution d'une équation ou de lecture dans des cartographies.

Les moyens configurés pour déterminer l'autonomie du véhicule peuvent être configurés pour prendre en considération les pertes liées à la transmission mécanique du véhicule.

D'autres buts, caractéristiques et avantages apparaîtront à la lecture de la description suivante donnée uniquement en tant qu'exemple non limitatif et faite en référence aux dessins annexés sur lesquels :

- la figure 1 illustre de manière schématique différents éléments d'un véhicule muni d'un groupe motopropulseur électrique,

- la figure 2 illustre de manière schématique différente étapes d'un procédé selon un mode de mise en oeuvre de l'invention,
- la figure 3 illustre de manière schématique différents éléments d'un système selon un mode de réalisation de l'invention.

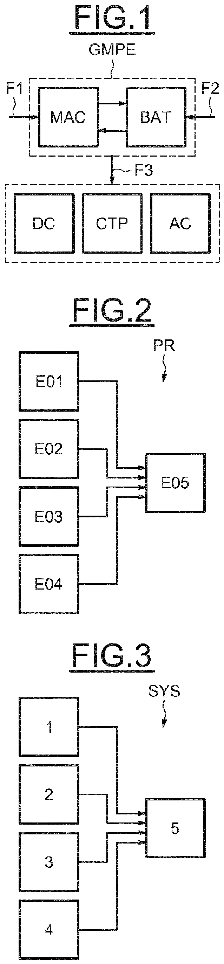

Sur la figure 1, on a représenté différents éléments d'un véhicule muni d'un groupe motopropulseur électrique GMPE, par exemple un véhicule à traction électrique ou hybride. Le groupe motopropulseur électrique GMPE comporte une machine électrique MAC destinée par exemple à faire tourner les roues ou à récupérer de l'énergie électrique (par exemple par freinage régénératif), et une batterie BAT capable de fournir de l'énergie à la machine électrique MAC et de recevoir de l'énergie de la machine électrique MAC.

Par la flèche F1, on a représenté l'énergie apportée par la route par exemple lors d'une phase de récupération d'énergie c'est-à-dire de freinage régénératif. Par la flèche F2, on a représenté l'énergie apportée par une charge de la batterie par exemple lorsque cette batterie est branchée à un réseau d'alimentation électrique.

Le véhicule peut également comprendre plusieurs appareils électriques disposés en dehors du groupe motopropulseur électrique GMPE, notamment un système de conversion électrique ou convertisseur électrique DC, un appareil de chauffage CTP et un appareil de refroidissement AC. C'est le convertisseur électrique DC qui alimente en électricité les autres appareils électriques, notamment l'appareil de chauffage CTP et l'appareil de refroidissement AC. Par la flèche F3, on a représenté l'apport d'énergie électrique provenant du groupe motopropulseur électrique GMPE vers ces appareils.

Sur la figure 2 on a représenté différentes étapes d'un procédé PR selon un mode de mise en oeuvre de l'invention. Ce procédé PR peut être mis en oeuvre au sein d'un véhicule comprenant les éléments décrits se référant à la figure 1.

Dans une première étape E01 on détermine l'énergie disponible dans la batterie, par exemple la batterie du véhicule BAT. Cette détermination peut notamment comprendre une détermination de l'énergie disponible dans la batterie lorsque le groupe motopropulseur électrique fonctionne en mode moteur et de l'énergie disponible dans la batterie lorsque le groupe motopropulseur électrique fonctionne en mode de récupération d'énergie.

Le procédé PR comprend également une étape E02 de détermination du rendement du groupe motopropulseur électrique. Le rendement est noté :

$$\eta^{GMPE} = \frac{E^{trac,mot} + E^{Bat,gen} - E^{DCDC,gen} - E^{CTP,gen} - E^{AC,gen}}{E^{trac,gen} + E^{Bat,mot} - E^{DCDC,mot} - E^{CTP,mot} - E^{AC,mot}}$$

Avec :

$\eta^{GMPE}$ le rendement du groupe motopropulseur électrique,
$E^{trac,mot}$ l'énergie relative à une machine électrique en mode moteur,
$E^{trac,gen}$ l'énergie relative à une machine électrique en mode de récupération d'énergie,
$E^{Bat,gen}$ l'énergie disponible dans la batterie en mode de récupération d'énergie,
$E^{Bat,mot}$ l'énergie disponible dans la batterie en mode moteur,
$E^{DCDC,gen}$ l'énergie relative à un système de conversion d'énergie, par exemple DC, en mode de récupération d'énergie,
$E^{DCDC,mot}$ l'énergie relative à un système de conversion d'énergie, par exemple DC, en mode moteur,
$E^{CTP,gen}$ l'énergie relative à un appareil de chauffage, par exemple CTP, en mode de récupération d'énergie,
$E^{CTP,mot}$ l'énergie relative à un appareil de chauffage, par exemple CTP, en mode moteur,
$E^{AC,gen}$ l'énergie relative à un appareil de refroidissement, par exemple AC, en mode de récupération d'énergie, et
$E^{AC,mot}$ l'énergie relative à un appareil de refroidissement, par exemple AC, en mode moteur.

L'étape E02 peut être mise en oeuvre en mettant en oeuvre une acquisition de données pendant une période de l'ordre d'une semaine. Pour les données relatives à des appareils disposés en dehors du groupe motopropulseur électrique, on peut mettre en oeuvre une acquisition de données pendant une durée plus courte, par exemple une demi-journée.

La consommation électrique du groupe motopropulseur électrique s'écrit :

$$c_e = \frac{E^{Bat}}{A}$$

$$E^{Bat} = E^{Bat,mot} - E^{Bat,gen}$$

Avec :

$c_e$ la consommation électrique du groupe motopropulseur,
$E^{Bat}$ l'énergie disponible dans la batterie, et
A l'autonomie du véhicule.

On a également :

$$E^{DCDC} = E^{DCDC,mot} - E^{DCDC,gen}$$

$$E^{CTP} = E^{CTP,mot} - E^{CTP,gen}$$

$$E^{AC} = E^{AC,mot} - E^{AC,gen}$$

Où $E^{DCDC}$, $E^{CTP}$ et $E^{AC}$ sont respectivement les énergies relatives à un système de conversion électrique, à un appareil de chauffage, et à un appareil de refroidissement.
Par ailleurs, en notant X un élément parmi la machine électrique, la batterie, le système de conversion électrique, l'appareil de chauffage et l'appareil de refroidissement, on a :

$$c_x = \frac{E^x}{A}$$

Avec $c_x$ la consommation de l'élément X par kilomètre et $E^x$ l'énergie relative à l'élément X.
En outre, la consommation de l'élément X lorsque le groupe motopropulseur fonctionne en mode moteur est notée :

$$c_X^{mot} = \frac{E^{x,mot}}{A}$$

Et la consommation de l'élément X lorsque le groupe motopropulseur fonctionne en mode de récupération d'énergie est notée :

$$c_X^{gen} = \frac{E^{x,gen}}{A}$$

Au vu de ce qui précède, on a :

$$\eta^{GMPE} = \frac{c_{trac}^{mot} + \dfrac{E^{Bat,gen}}{A} - c_{DCDC}^{gen} - c_{CTP}^{gen} - c_{AC}^{gen}}{c_{trac}^{gen} + \dfrac{E^{Bat,mot}}{A} - c_{DCDC}^{mot} - c_{CTP}^{mot} - c_{AC}^{mot}}$$

La détermination de ces consommations est mise en oeuvre lors de l'étape E03.
En en notant $\eta^{GMPE,mot}$ le rendement du groupe moto propulseur électrique en mode moteur et $\eta^{GMPE,gen}$ le

rendement du groupe moto propulseur en mode de récupération d'énergie, on a :

$$
\begin{cases}
\eta^{GMPE} = f_1(c_{Bat}^{mot}, c_{Bat}^{gen}, c_{trac}^{mot}, c_{trac}^{gen}, c_{DCDC}^{mot}, c_{DCDC}^{gen}, c_{CTP}^{mot}, c_{CTP}^{gen}, c_{AC}^{mot}, c_{AC}^{gen}) \\
\eta^{GMPE,mot} = f_2(c_{Bat}^{mot}, c_{Bat}^{gen}, c_{trac}^{mot}, c_{trac}^{gen}, c_{DCDC}^{mot}, c_{DCDC}^{gen}, c_{CTP}^{mot}, c_{CTP}^{gen}, c_{AC}^{mot}, c_{AC}^{gen}) \\
\eta^{GMPE,gen} = f_3(c_{Bat}^{mot}, c_{Bat}^{gen}, c_{trac}^{mot}, c_{trac}^{gen}, c_{DCDC}^{mot}, c_{DCDC}^{gen}, c_{CTP}^{mot}, c_{CTP}^{gen}, c_{AC}^{mot}, c_{AC}^{gen}) \\
\eta^{GMPE} = \lambda \eta^{GMPE,mot} + (1-\lambda)\eta^{GMPE,gen} \\
ce = c_{Bat}^{mot} - c_{Bat}^{gen} \\
c_e = \dfrac{E^{Bat}}{A}
\end{cases}
$$

Avec $f_1$, $f_2$ et $f_3$ trois fonctions obtenues à partir des équations indiquées ci-dessus. $A$ est un paramètre d'utilisation du groupe motopropulseur électrique en mode moteur par rapport à un mode de récupération d'énergie. $A$ est obtenu lors de la mise en oeuvre de l'étape E04. Plus précisément, le paramètre $A$ peut être obtenu en utilisant l'historique de roulage, par exemple en utilisant un estimateur du couple, et en distinguant les cas où l'on est en mode moteur et les cas où l'on est en mode générateur. On peut également utiliser un compteur pour déterminer la durée pendant laquelle on est en mode moteur et un compteur pour déterminer la durée pendant laquelle on est en mode générateur, ces deux compteurs étant destinés à fonctionner pendant une durée d'étude fixe. $A$ est alors le rapport entre le résultat fourni par le premier compteur et le résultat fourni par le deuxième compteur, ces résultats étant obtenus à l'expiration de la durée d'étude.

On obtient un système de six équations avec six inconnues et six paramètres. Les six inconnues sont : $c_{Bat}^{mot}$, $c_{Bat}^{gen}$, $\eta^{GMPE,mot}$, $\eta^{GMPE,gen}$, $C_e$ et $A$.

Les six paramètres sont : $c_{trac}^{mot}$, $c_{trac}^{gen}$, $c_{DCDC}^{mot}$, $c_{DCDC}^{gen}$, $c_{CTP}^{mot}$, $c_{CTP}^{gen}$, $c_{AC}^{mot}$, $c_{AC}^{gen}$, $\lambda$ et $\eta^{GMPE}$.

On peut donc obtenir l'autonomie du véhicule A en résolvant ce système, par exemple de manière algébrique ou en variante en utilisant des cartographies. On peut noter que le nombre de paramètres utilisés ici permet d'avoir une meilleure détermination de l'autonomie A du véhicule.

On peut noter que les étapes E01 à E04 peuvent être mises en oeuvre simultanément.

Selon un mode de mise en oeuvre, il est possible de prendre en considération les pertes liées à la transmission mécanique du véhicule, notamment les sur les énergies relatives à la machine électrique MAC : $E^{trac,mot}$ et $E^{trac,gen}$.

On a :

$$
E^{trac,mot} = \int_{C>0, t\in[ta, ta-t2]} \left(C^{cons} - Pertes^{red} - Pertes^{trans}\right)N.dt
$$

Avec ta le temps actuel, t2 la durée d'une acquisition courte, par exemple pour les appareils disposés à l'extérieur du groupe motopropulseur électrique, N le régime moteur, $C^{cons}$ la consigne de couple. Aussi, $Pertes^{red}$ et $Pertes^{trans}$ sont des cartographies qui représentent les pertes mécaniques (en Newton) du réducteur mécanique et de la transmission. Il est également possible d'utiliser des fonctions physiques pour obtenir ces valeurs.

Pour prendre en considération l'impact thermique du réducteur et de la transmission sur l'autonomie, on peut donc inclure les pertes du réducteur et de la transmission dans le calcul des énergies mécaniques de traction. Ces pertes dépendent respectivement de N, de $C^{cons}$, et des températures $T^{RED}$ (la température du réducteur) et $T^{TRANS}$ (la température de la transmission).

On a donc :

$$
E^{trac,mot} = \int_{C>0, t\in[ta, ta-t2]} \left(C^{cons} - Pertes^{red}(C^{cons}, N, T^{RED}) - Pertes^{trans}(C^{cons}, N, T^{TRANS})\right)N.dt
$$

Pour déterminer la température $T^{RED}$, on peut utiliser un capteur de température pour mesurer la température de l'huile du réducteur et considérer qu'elle est sensiblement égale à $T^{RED}$.

On peut aussi utiliser un estimateur de la température de l'huile $T^{huile}$:

$$\rho V C_p \frac{dT^{huile}}{dt} = P_t^{RED} - h S^{RED}(T^{ext} - T^{huile})$$

Avec $\rho$ la masse volumique, V le volume, $C_p$ la chaleur massique, $P_t^{RED}$ les pertes énergétiques au niveau du réducteur ( $P_t^{RED} = Pertes^{red}(C^{cons}, N, T^{RED}) \times N$ ), h un coefficient, $S^{RED}$ l'entropie.

Et, pour $T^{TRANS}$, on peut utiliser l'estimateur suivant :

$$\rho V C_p \frac{dT^{TRANS}}{dt} = P_t^{TRANS} - h S^{TRANS}(T^{ext} - T^{TRANS})$$

Avec $P_t^{RED}$ les pertes énergétiques au niveau de la transmission ( $P_t^{TRANS} = Pertes^{TRANS}(C^{cons}, N, T^{TRANS}) \times N$ ), h un coefficient, $S^{TRANS}$ l'entropie.

Sur la figure 3, on a représenté un système SYS de détermination de l'autonomie d'un véhicule muni d'un groupe motopropulseur électrique, par exemple le groupe motopropulseur GMPE, permettant la récupération d'énergie.

Le système SYS comprend :

- des moyens 1 configurés pour déterminer l'énergie disponible dans une batterie,
- des moyens 2 configurés pour déterminer le rendement du groupe motopropulseur électrique,
- des moyens 3 configurés pour déterminer la consommation d'au moins un élément du groupe motopropulseur électrique,
- des moyens 4 configurés pour déterminer un paramètre d'utilisation du groupe motopropulseur électrique en mode moteur par rapport à un mode de récupération d'énergie
- des moyens 5 configurés pour déterminer l'autonomie du véhicule en fonction de l'énergie disponible dans la batterie, du rendement du groupe motopropulseur électrique, de la consommation du groupe motopropulseur électrique et dudit paramètre.

Le système SYS peut en outre mettre en oeuvre le procédé PR.

Grâce à l'invention, on obtient une amélioration de la détermination de l'autonomie d'un véhicule.

## Revendications

1. Procédé de détermination de l'autonomie d'un véhicule muni d'un groupe motopropulseur électrique permettant la récupération d'énergie, **caractérisé en ce qu'**il comprend :

   - une détermination (E01) de l'énergie disponible dans une batterie,
   - une détermination (E02) du rendement du groupe motopropulseur électrique,
   - une détermination (E03) de la consommation d'au moins un élément du groupe motopropulseur électrique,
   - une détermination (E04) d'un paramètre d'utilisation du groupe motopropulseur électrique en mode moteur par rapport à un mode de récupération d'énergie,
   - une détermination (E05) de l'autonomie du véhicule en fonction de l'énergie disponible dans la batterie, du rendement du groupe motopropulseur électrique, de la consommation du groupe motopropulseur électrique et dudit paramètre.

2. Procédé selon la revendication 1 dans lequel la détermination du rendement du groupe motopropulseur électrique comprend une acquisition de données pendant une première période.

3. Procédé selon la revendication 1 ou 2, dans lequel la détermination du rendement du groupe motopropulseur et la détermination de la consommation du groupe motopropulseur électrique comprennent des déterminations des énergies nécessaires au fonctionnement des éléments du groupe motopropulseur, et de la consommation desdits éléments.

4. Procédé selon la revendication 3, comprenant en outre une détermination des énergies nécessaires au fonctionnement d'appareils électriques disposés dans le véhicule en dehors du groupe motopropulseur pour déterminer ledit rendement du groupe motopropulseur électrique et une détermination des consommations desdits appareils électriques disposés dans le véhicule en dehors du groupe motopropulseur pour déterminer ladite autonomie.

5.  Procédé selon la revendication 4, dans lequel la détermination des énergies et des consommations desdits appareils électriques disposés dans le véhicule en dehors du groupe motopropulseur comprend une acquisition de données pendant une deuxième période, la durée de la première période étant plus longue que la durée de la deuxième période.

6.  Procédé selon l'une quelconque des revendications précédentes, dans lequel la détermination de l'autonomie du véhicule est mise en oeuvre par résolution d'une équation ou par lecture dans des cartographies.

7.  Procédé selon l'une quelconque des revendications précédentes, dans lequel on prend en considération les pertes liées à la transmission mécanique du véhicule.

8.  Système de détermination de l'autonomie d'un véhicule muni d'un groupe motopropulseur électrique permettant la récupération d'énergie, **caractérisé en ce qu'**il comprend :

    - des moyens (1) configurés pour déterminer l'énergie disponible dans une batterie,
    - des moyens (2) configurés pour déterminer le rendement du groupe motopropulseur électrique,
    - des moyens (3) configurés pour déterminer la consommation d'au moins un élément du groupe motopropulseur électrique,
    - des moyens (4) configurés pour déterminer un paramètre d'utilisation du groupe motopropulseur électrique en mode moteur par rapport à un mode de récupération d'énergie
    - des moyens (5) configurés pour déterminer l'autonomie du véhicule en fonction de l'énergie disponible dans la batterie, du rendement du groupe motopropulseur électrique, de la consommation du groupe motopropulseur électrique et dudit paramètre.

9.  Système selon la revendication 8, dans lequel les moyens configurés pour déterminer le rendement du groupe motopropulseur électrique comprennent des moyens d'acquisition de données pendant une première période.

10. Système selon la revendication 8 ou 9, comprenant en outre des moyens configurés pour déterminer des énergies nécessaires au fonctionnement des éléments du groupe motopropulseur, et de la consommations desdits éléments, en communication avec les moyens configurés pour déterminer le rendement du groupe motopropulseur et les moyens configurés pour déterminer la consommation du groupe motopropulseur électrique.

11. Système selon la revendication 10, comprenant en outre des moyens configurés pour déterminer les énergies nécessaires au fonctionnement d'appareils électriques disposés dans le véhicule en dehors du groupe motopropulseur en communication avec les moyens configurés pour déterminer le rendement du groupe motopropulseur électrique, et des moyens configurés pour déterminer des consommations desdits appareils électriques disposés dans le véhicule en dehors du groupe motopropulseur.

12. Système selon la revendication 11, dans lequel les moyens configurés pour déterminer les énergies et des consommations des appareils électriques disposés dans le véhicule en dehors du groupe motopropulseur comprennent des moyens d'acquisition de données pendant une deuxième période, la durée de la première période étant plus longue que la durée de la deuxième période.

13. Système selon l'une quelconque des revendications 8 à 12, dans lequel les moyens configurés pour déterminer l'autonomie du véhicule comprennent des moyens de résolution d'une équation ou de lecture dans des cartographies.

14. Système selon l'une quelconque des revendications 8 à 13, dans lequel les moyens configurés pour déterminer l'autonomie du véhicule sont configurés pour prendre en considération les pertes liées à la transmission mécanique du véhicule.

**Patentansprüche**

1.  Verfahren zur Bestimmung der Reichweite eines Fahrzeugs, das mit einer elektrischen Antriebseinheit versehen ist, die die Energierückgewinnung erlaubt, **dadurch gekennzeichnet, dass** es enthält:

- eine Bestimmung (E01) der in einer Batterie verfügbaren Energie,
- eine Bestimmung (E02) des Wirkungsgrads der elektrischen Antriebseinheit,
- eine Bestimmung (E03) des Verbrauchs mindestens eines Elements der elektrischen Antriebseinheit,
- eine Bestimmung (E04) eines Nutzungsparameters der elektrischen Antriebseinheit im Motor-Modus bezüglich eines Energierückgewinnungsmodus,
- eine Bestimmung (E05) der Reichweite des Fahrzeugs abhängig von der in der Batterie verfügbaren Energie, vom Wirkungsgrad der elektrischen Antriebseinheit, vom Verbrauch der elektrischen Antriebseinheit und vom Parameter.

2. Verfahren nach Anspruch 1, wobei die Bestimmung des Wirkungsgrads der elektrischen Antriebseinheit eine Erfassung von Daten während einer ersten Periode enthält.

3. Verfahren nach Anspruch 1 oder 2, wobei die Bestimmung des Wirkungsgrads der Antriebseinheit und die Bestimmung des Verbrauchs der elektrischen Antriebseinheit Bestimmungen der für den Betrieb der Elemente der Antriebseinheit notwendigen Energien und des Verbrauchs der Elemente enthalten.

4. Verfahren nach Anspruch 3, das außerdem eine Bestimmung der für den Betrieb von im Fahrzeug außerhalb der Antriebseinheit angeordneten elektrischen Geräten notwendigen Energien, um den Wirkungsgrad der elektrischen Antriebseinheit zu bestimmen, und eine Bestimmung des Verbrauchs der im Fahrzeug außerhalb der Antriebseinheit angeordneten elektrischen Geräte enthält, um die Reichweite zu bestimmen.

5. Verfahren nach Anspruch 4, wobei die Bestimmung der Energien und des Verbrauchs der im Fahrzeug außerhalb der Antriebseinheit angeordneten elektrischen Geräte eine Datenerfassung während einer zweiten Periode enthält, wobei die Dauer der ersten Periode länger ist als die Dauer der zweiten Periode.

6. Verfahren nach einem der vorhergehenden Ansprüche, wobei die Bestimmung der Reichweite des Fahrzeugs durch Auflösung einer Gleichung oder durch Lesen in Kennfeldern durchgeführt wird.

7. Verfahren nach einem der vorhergehenden Ansprüche, wobei die mit dem mechanischen Getriebe des Fahrzeugs verbundenen Verluste berücksichtigt werden.

8. System zur Bestimmung der Reichweite eines Fahrzeugs, das mit einer die Energierückgewinnung erlaubenden elektrischen Antriebseinheit versehen ist, **dadurch gekennzeichnet, dass** es enthält:

- Einrichtungen (1), die konfiguriert sind, die in einer Batterie verfügbare Energie zu bestimmen,
- Einrichtungen (2), die konfiguriert sind, den Wirkungsgrad der elektrischen Antriebseinheit zu bestimmen,
- Einrichtungen (3), die konfiguriert sind, den Verbrauch mindestens eines Elements der elektrischen Antriebseinheit zu bestimmen,
- Einrichtungen (4), die konfiguriert sind, einen Nutzungsparameter der elektrischen Antriebseinheit im Motor-Modus bezüglich eines Energierückgewinnungsmodus zu bestimmen,
- Einrichtungen (5), die konfiguriert sind, die Reichweite des Fahrzeugs abhängig von der in der Batterie verfügbaren Energie, vom Wirkungsgrad der elektrischen Antriebseinheit, vom Verbrauch der elektrischen Antriebseinheit und vom Parameter zu bestimmen.

9. System nach Anspruch 8, wobei die Einrichtungen, die konfiguriert sind, den Wirkungsgrad der elektrischen Antriebseinheit zu bestimmen, Einrichtungen zur Datenerfassung während einer ersten Periode enthalten.

10. System nach Anspruch 8 oder 9, das außerdem Einrichtungen enthält, die konfiguriert sind, die für den Betrieb der Elemente der Antriebseinheit notwendigen Energien und den Verbrauch der Elemente zu bestimmen, die mit den Einrichtungen, die konfiguriert sind, den Wirkungsgrad der Antriebseinheit zu bestimmen, und den Einrichtungen in Verbindung stehen, die konfiguriert sind, den Verbrauch der elektrischen Antriebseinheit zu bestimmen.

11. System nach Anspruch 10, das außerdem Einrichtungen enthält, die konfiguriert sind, die für den Betrieb von im Fahrzeug außerhalb der Antriebseinheit angeordneten elektrischen Geräten notwendigen Energien zu bestimmen, die mit den Einrichtungen, die konfiguriert sind, den Wirkungsgrad der elektrischen Antriebseinheit zu bestimmen, und Einrichtungen in Verbindung stehen, die konfiguriert sind, einen Verbrauch der im Fahrzeug außerhalb der

EP 2 837 539 B1

Antriebseinheit angeordneten elektrischen Geräte zu bestimmen.

**12.** System nach Anspruch 11, wobei die Einrichtungen, die konfiguriert sind, die Energien und einen Verbrauch der im Fahrzeug außerhalb der Antriebseinheit angeordneten elektrischen Geräte zu bestimmen, Einrichtungen zur Datenerfassung während einer zweiten Perioden enthalten, wobei die Dauer der ersten Periode länger ist als die Dauer der zweiten Periode.

**13.** System nach einem der Ansprüche 8 bis 12, wobei die Einrichtungen, die konfiguriert sind, die Reichweite des Fahrzeugs zu bestimmen, Einrichtungen zur Auflösung einer Gleichung oder zum Lesen in Kennfeldern enthalten.

**14.** System nach einem der Ansprüche 8 bis 13, wobei die Einrichtungen, die konfiguriert sind, die Reichweite des Fahrzeugs zu bestimmen, konfiguriert sind, die mit dem mechanischen Getriebe des Fahrzeugs verbundenen Verluste zu berücksichtigen.

**Claims**

**1.** Method for determining the range of a vehicle provided with an electric power train that allows the harvesting of energy, **characterized in that** it comprises:

- a determination (E01) of the energy available in a battery,
- a determination (E02) of efficiency of the electric power train,
- a determination (E03) of the consumption of at least one element of the electric power train,
- a determination (E04) of a parameter of use of the electric power train in motor mode compared to an energy harvesting mode,
- a determination (E05) of the range of the vehicle as a function of the energy available in the battery, of the efficiency of the electric power train, of the consumption of the electric power train and of said parameter.

**2.** Method according to Claim 1, in which the determination of the efficiency of the electric power train comprises an acquisition of data during a first period.

**3.** Method according to Claim 1 or 2, in which the determination of the efficiency of the power train and the determination of the consumption of the electric power train comprise determinations of the energies necessary to the operation of the elements of the power train, and of the consumption of said elements.

**4.** Method according to Claim 3, further comprising a determination of the energies necessary to the operation of electrical units arranged in the vehicle outside of the power train to determine said efficiency of the electric power train and a determination of the consumptions of said electric units arranged in the vehicle outside of the power train to determine said range.

**5.** Method according to Claim 4, in which the determination of the energies and of the consumptions of said electric units arranged in the vehicle outside of the power train comprise an acquisition of data during a second period, the duration of the first period being longer than the duration of the second period.

**6.** Method according to any one of the preceding claims, in which the determination of the range of the vehicle is implemented by solving an equation or by reading from maps.

**7.** Method according to any one of the preceding claims, in which the losses linked to the mechanical transmission of the vehicle are taken into consideration.

**8.** System for determining the range of a vehicle provided with an electric power train allowing the harvesting of energy, **characterized in that** it comprises:

- means (1) configured to determine the energy available in a battery,
- means (2) configured to determine the efficiency of the electric power train,
- means (3) configured to determine the consumption of at least one element of the electric power train,
- means (4) configured to determine a parameter of use of the electric power train in motor mode compared to an energy harvesting mode,

- means (5) configured to determine the range of the vehicle as a function of the energy available in the battery, of the efficiency of the electric power train, of the consumption of the electric power train and of said parameter.

9. System according to Claim 8, in which the means configured to determine the efficiency of the electric power train comprise means for acquiring data during a first period.

10. System according to Claim 8 or 9, further comprising means configured to determine energies necessary to the operation of the elements of the power train, and the consumption of said elements, in communication with the means configured to determine the efficiency of the power train and the means configured to determine the consumption of the electric power train.

11. System according to Claim 10, further comprising means configured to determine the energies necessary to the operation of electric units arranged in the vehicle outside of the power train in communication with the means configured to determine the efficiency of the electric power train, and means configured to determine consumptions of said electric units arranged in the vehicle outside of the power train.

12. System according to Claim 11, in which the means configured to determine the energies and consumptions of the electric units arranged in the vehicle outside of the power train comprise means for acquiring data during a second period, the duration of the first period being longer than the duration of the second period.

13. System according to any one of Claims 8 to 12, in which the means configured to determine the range of the vehicle comprise means for solving an equation or for reading in maps.

14. System according to any one of Claims 8 to 13, in which the means configured to determine the range of the vehicle are configured to take the losses linked to the mechanical transmission of the vehicle into consideration.

# FIG.1

GMPE

F1

MAC → BAT ← F2

F3

DC    CTP    AC

# FIG.2

PR

E01

E02

E03    → E05

E04

# FIG.3

SYS

1

2

3    → 5

4

**EP 2 837 539 B1**

## RÉFÉRENCES CITÉES DANS LA DESCRIPTION

**Documents brevets cités dans la description**

- DE 10302504

- DE 102011055669